Europäisches Patentamt

European Patent Office

Office européen des brevets

(11) Publication number: **0 159 788**

**B1**

# EUROPEAN PATENT SPECIFICATION

(45) Date of publication of patent specification: **24.05.89**

(51) Int. Cl.⁴: **H 01 B 3/44,** C 08 L 27/06

(21) Application number: **85301569.1**

(22) Date of filing: **07.03.85**

(54) Insulated wires.

(30) Priority: **08.03.84 GB 8406083**

(43) Date of publication of application:
**30.10.85 Bulletin 85/44**

(45) Publication of the grant of the patent:
**24.05.89 Bulletin 89/21**

(84) Designated Contracting States:
**AT BE CH DE FR IT LI LU NL SE**

(56) References cited:
FR-A-2 162 766
US-A-2 438 949

CHEMICAL ABSTRACTS, vol. 94, no. 6, 9th
February 1981, page 35, no. 31561d, Columbus,
Ohio, US; & JP - A - 80 90 547 (NIPPON
CARBIDE IND.) 09-07-1980

CHEMICAL ABSTRACTS, vol. 83, no. 14, 6th
October 1975, page 51, no. 115633q, Columbus,
Ohio, US; J.T.LUTZ, Jr.: "Acrylic modification
of plasticized poly(vinylchloride)" & ADV.

(73) Proprietor: **BICC Public Limited Company**
**21, Bloomsbury Street**
**London, WC1B 3QN (GB)**

(72) Inventor: **Sawyer, Dudley Noel**
**10 Hillside Road**
**Kelsall Tarporley Cheshire CW6 0NT (GB)**

(74) Representative: **Poole, Michael John et al**
**BICC plc Group Patents & Licensing Dept.**
**Network House 1, Ariel Way Wood Lane**
**London W12 7SL (GB)**

(56) References cited:
**CHEM. SER. 1974, 134(FILLERS REINF. PLAST.,**
**SYMP., 1973), 61-72**
**J. T. Lutz Jr., Adv. Chem. Ser. 1974, 134, 61-72**

Courier Press, Leamington Spa, England.

## Description

This invention relates to insulated wires suitable for use in internal wiring of electrical and electronic equipment, motor vehicles, conduit installations in buildings and for other purposes.

Thermoplastic compositions based on flexible PVC (by which is meant homopolymers and/or copolymers of vinyl chloride compounded with at least one plasticiser) are widely used for the insulation of such wires and give excellent service in most applications. For some applications, however, superior abrasion resistance is required, and in such cases crosslinked PVC compounds or other relatively expensive materials have been specified, or a greater insulation thickness or reduced flexibility reluctantly accepted.

The present invention provides wires insulated with flexible PVC that have improved abrasion resistance without crosslinking and may in some cases meet scrape abrasion specification requirements applicable to cross-linked PVC-insulated wires.

In accordance with the invention, an electric wire is insulated with a layer of a thermoplastic flexible PVC, not formed by application of insulating tape, the layer comprising: at least one homopolymer or copolymer of vinyl chloride; at least one plasticiser therefor; and at least one additive characterised in that the additive is a ternary copolymer of styrene, butadiene and either acrylonitrile or a methacrylate and is present in an amount that is in the range of 2—10% by weight, based on the entire flexible polyvinyl chloride composition, and is effective to raise the number of scrapes to failure when the wire is subjected to a scrape abrasion test in accordance with British Standard BSG 212 to at least 300 double strokes.

These additives are well-known and widely used as impact modifying agents in 'rigid' PVC composition (i.e. compositions with no, or very little, plasticiser) in which they reduce the tendency to shatter on impact and it has been suggested that they might also be added to flexible PVC compositions (J. T. Lutz, Adv. Chem. Ser. 1974, 134 pp 61—72). One application suggested by Lutz is in adhesive-coated PVC electrical tapes where the object is to get adequate low-temperature impact resistance without using plasticisers that will migrate into the adhesive. Suitable ternary copolymers of styrene, butadiene and either acrylonitrile or methacrylate are sold by Borg-Warner Limited under the trademark Blendex.

These additives are effective in amounts ranging from about 2 to about 10% by weight of the entire flexible PVC composition. A preferred range is 4—7%.

The plasticiser or plasticisers may be selected from dialkyl phthalates, trialkyl trimellitates, phosphate plasticisers and polymeric plasticisers; conventional amounts can be used.

The flexible PVC composition may also include fillers (e.g. clay, calcium carbonate), pigments, lubricants (e.g. calcium stearate, paraffin wax), stabilisers (e.g. lead phthalate), flame retardants (e.g. antimony trioxide alone or mixed with zinc borate).

## EXAMPLE 1

A flexible equipment wire of nominal cross-section 0.5 mm$^2$, made up of 7 fine round wires is insulated to a radial thickness of 0.3 mm with a flexible PVC composition as follows:

|  | parts by weight | weight % |
|---|---|---|
| PVC homopolymer:<br>(K-value 69—71) | 100 | 58.6 |
| plasticiser:<br>    Triallyl trimellitate<br>    (Bisoflex* TL79T) | 33.5 | 19.6 |
| impact modifying agent:<br>    styrene/butadiene/acrylonitrile copolymer<br>    (Blendex* 310S) | 11 | 6.45 |
| filler:<br>    clay (Polestar* 501) | 5.51 | 3.2 |
| lubricants:<br>    calcium stearate paste<br>    paraffin wax | 1<br>0.5 | 0.6<br>0.3 |
| stabiliser:<br>    lead phthalate<br>    (Dythal* paste) | 13.5 | 7.9 |
| flame retardant:<br>    antimony trioxide<br>    (Timonox*) | 5.51 | 3.2 |

* trademarks

## EXAMPLE 2

This was similar to Example 1 except that the flexible PVC composition had the formulation:

|  | parts by weight | weight % |
|---|---|---|
| PVC homopolymer:<br>(K-value 69—71) | 100 | 57.1 |
| plasticiser:<br>    a polymeric adipate<br>    (Diolpate* 195) | 37.8 | 21.6 |
| impact modifying agent:<br>    styrene/butadiene/acrylonitrile copolymer<br>    (Blendix* 310S) | 11.11 | 6.35 |
| filler:<br>    clay (Polestar* 501) | 5.56 | 3.18 |
| lubricants:<br>    calcium stearate paste<br>    paraffin wax | 1.11<br>0.56 | 0.63<br>0.32 |
| stabiliser:<br>    lead phthalate<br>    (Dythal* paste) | 13.33 | 7.62 |
| flame retardant:<br>    antimony trioxide<br>    (Timonox*) | 5.56 | 3.18 |

* trademarks

## EP 0 159 788 B1

When tested for resistance to scrape abrasion in accordance with British Standard BSG 212 except that the loading was increased to 7N, a measurement of about 360 double strokes was obtained in each of the Examples. This should be compared with a requirement for 300 double strokes for an equivalent crosslinked PVC insulated wire of this size.

### Claims

1. An electric wire insulated with a layer of a thermoplastic flexible PVC, not formed by appplication of insulating tape, the layer comprising:
   at least one homopolymer or copolymer of vinyl chloride;
   at least one plasticiser therefor; and
   at least one additive
characterised in that the additive is a ternary copolymer of styrene, butadiene and either acrylonitrile or a methacrylate and is present in an amount that is in the range 2—10% by weight, based on the entire flexible polyvinyl chloride composition, and is effective to raise the number of scrapes to failure when the wire is subjected to a scrape abrasion test in accordance with British Standard BSG 212 to at least 300 double strokes.

2. A wire as claimed in Claim 1 in which the flexible PVC composition contains 4 to 7% by weight of the said ternary copolymer.

### Patentansprüche

1. Elektrischer Draht, isoliert mit einer Schicht aus einem thermoplastischen elastischen PVC, die nicht durch Aufbringen eines Isolierbands gebildet wird, wobei die Schicht aufweist:
   mindestens ein Homopolymer oder Copolymer von Vinylchlorid,
   mindestens einen zugehörigen Weichmacher und
   mindestens einen Zusatz,
dadurch gekennzeichnet, daß der Zusatz ein ternäres Copolymer aus Styrol, Butadien und entweder Acrylnitril oder einem Methacrylat ist und in einer Menge vorliegt, die im Bereich von 2 bis 10 Gew.-% auf der Basis der gesamten elastischen Polyvinylchloridmischung liegt, und geeignet ist, die Zahl der Kratzversuche zu Fehlern zu erhöhen, wenn der Draht einem Kratzabriebtest entsprechend dem Britischen Standard BSG 212 bis zu mindestens 300 Doppelschlägen ausgesetzt wird.

2. Draht nach Anspruch 1, wobei die elastische PVC-Mischung 4 bis 7 Gewichtsprozent des ternären Copolymers enthält.

### Revendications

1. Fil électrique isolé avec une couche d'un PVC thermoplastique souple, non formée par application d'un ruban isolant, la couche comprenant:
   au moins un homopolymère ou copolymère de chlorure de vinyle;
   au moins un plastifiant du polymère; et
   au moins un additif
caractérisé en ce que cet additif est un copolymère ternaire de styrène, butadiène et soit acrylonitrile, soit méthacrylate et qu'il est présent à raison de 2—10% en poids par rapport à toute la composition souple de poly(chlorure de vinyle) et qu'il est efficace pour augmenter le nombre de reclages avant destruction, quand le fil est soumis au test d'abrasion par raclage selon British Standard 212, à au moins 300 doubles passages.

2. Fil selon la revendication 1, dans lequel la composition de PVC souple contient de 4 à 7% en poids dudit copolymère ternaire.